(19) Europäisches Patentamt / European Patent Office / Office européen des brevets

(11) **EP 4 607 439 A1**

(12) **EUROPEAN PATENT APPLICATION**
published in accordance with Art. 153(4) EPC

(43) Date of publication:
**27.08.2025 Bulletin 2025/35**

(21) Application number: **23879409.3**

(22) Date of filing: **13.07.2023**

(51) International Patent Classification (IPC):
*G06Q 50/02* (2024.01)     *A01G 7/00* (2006.01)
*G06Q 10/04* (2023.01)

(52) Cooperative Patent Classification (CPC):
**A01G 7/00; G06Q 10/04; G06Q 50/02**

(86) International application number:
**PCT/JP2023/025916**

(87) International publication number:
**WO 2024/084755 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2022 JP 2022168385**

(71) Applicant: **NATIONAL AGRICULTURE AND FOOD RESEARCH ORGANIZATION**
**Tsukuba-shi, Ibaraki 305-8517 (JP)**

(72) Inventors:
• **ODA, Atsushi**
  **Tsukuba-shi, Ibaraki 305-8519 (JP)**
• **SUGIYAMA, Tomomi**
  **Tsukuba-shi, Ibaraki 305-8519 (JP)**
• **ISOZAKI, Masahide**
  **Tsukuba-shi, Ibaraki 305-8519 (JP)**
• **HIGASHIDE, Tadahisa**
  **Tsukuba-shi, Ibaraki 305-8519 (JP)**

(74) Representative: **Haseltine Lake Kempner LLP**
**Cheapside House**
**138 Cheapside**
**London EC2V 6BJ (GB)**

(54) **PREDICTION METHOD, PREDICTION PROGRAM, ENVIRONMENTAL ADJUSTMENT METHOD, AND ENVIRONMENTAL ADJUSTMENT PROGRAM**

(57)     To accurately predict a cultivation period from flowering to a time when a fruit is able to be harvested in a fruit vegetable, a computer implements processing of acquiring or estimating a fruit temperature that is a temperature of a fruit surface of the fruit vegetable on and after a flowering date, calculating a period of each of a plurality of stages acquired by dividing a period from flowering to harvest, based on the fruit temperature, and predicting the cultivation period by summing calculated periods of the plurality of stages, in the calculating, a contribution degree of the fruit temperature to a calculation result of a period of each of the plurality of stages is determined for each of the stages.

**EP 4 607 439 A1**

## FIG. 8

(a)

| FLOWERING DATE | FLOWERING NUMBER | TARGET HARVEST DATE | |
|---|---|---|---|
| NOV. 9th | 300 | DEC. 19th | |
| NOV. 10th | 500 | DEC. 20th | } RANGE B |
| NOV. 11th | 200 | DEC. 21th | |

(b)

| | FRUIT TEMPER-ATURE |
|---|---|
| NOV. 9th | 15°C |
| NOV. 10th | 15°C |
| NOV. 11th | 15°C |
| ... | ... |
| DEC. 23th | 13°C |
| DEC. 24th | 13°C |

⇒

(c)

| | DAILY AVERAGE FRUIT TEMPERATURE |
|---|---|
| t1 | 14.7 |
| t2 | 14 |
| t3 | 13.1 |
| t4 | 13 |

(d)

| EQUATION OF Tk | Tk |
|---|---|
| T1=150/(0.15×14.7+15) | 9 DAYS |
| T2=150/(0.6×14+5) | 11 DAYS |
| T3=150/(0.9×13.1+0) | 13 DAYS |
| T4=150/(1.0×13+0) | 12 DAYS |

(e)

| CULTIVATION PERIOD = T1+T2+T3+T4 | 45 DAYS |
|---|---|
| HARVEST DATE = NOV. 10th+45 DAYS | DEC. 25th |

**Description**

[TECHNICAL FIELD]

The present invention relates to a prediction method, a prediction program, an environment adjustment method, and an environment adjustment program.

[BACKGROUND ART]

The demand for fruit vegetables varies depending on the season. For example, strawberries are in high demand in Christmas and New Year.
Therefore, if the producer can harvest and ship them at such a time, the producer can trade them at a high price and increase the profit. Therefore, conventionally, producers predict harvest times and make various adjustments based on long-term experience and intuition. This has led to the harvest of fruits at a time when demand is high.

In contrast, in recent years, there is a technique of predicting information on growth such as harvest time from integrated temperature or the like (for example, see Patent Documents 1 to 6).

[PRIOR ART DOCUMENT]

[PATENT DOCUMENT]

[Patent Document 1] Japanese Patent Application Publication No. H05-336843

[Patent Document 2] Japanese Patent Application Publication No. H07-11125

[Patent Document 3] Japanese Patent Application Publication No. 2013-191107

[Patent Document 4] Japanese Patent Application Publication No. 2015-176339

[Patent Document 5] Japanese Patent Application Publication No. 2019-176766

[Patent Document 6] WO 2020/26358

[SUMMARY OF THE INVENTION]

[PROBLEMS TO BE SOLVED BY THE INVENTION]

However, in the conventional methods (Patent Documents 1 to 6, etc.), there is a possibility that the period from flowering to harvest (cultivation period) and the harvest time cannot be predicted with high accuracy.

The present invention aims to provide a prediction method and a prediction program capable of accurately predicting a cultivation period of fruit vegetables. Also, the present invention aims to provide an environment adjustment method and an environment adjustment program capable of appropriately adjusting cultivation environment of fruit vegetables.

[MEANS FOR SOLVING THE PROBLEMS]

A prediction method, according to the present invention, for predicting a cultivation period from flowering to a time when a fruit is able to be harvested in a fruit vegetable, implemented by a computer, includes: acquiring or estimating a fruit temperature that is a temperature of a fruit surface of the fruit vegetable on and after a flowering date; calculating a period of each of a plurality of stages acquired by dividing a period from flowering to harvest, based on the fruit temperature; and predicting the cultivation period by summing calculated periods of the plurality of stages, in the calculating, a contribution degree of the fruit temperature to a calculation result of a period of each of the plurality of stages is determined for each of the stages.

[EFFECTS OF THE INVENTION]

A prediction method and a prediction program according to the present invention have an effect of being able to accurately predict a cultivation period of fruit vegetables. An environment adjustment method and an environment adjustment program according to the present invention also have an effect of being able to appropriately adjust cultivation environment of fruit vegetables.

[BRIEF DESCRIPTION OF THE DRAWINGS]

FIG. 1 is a view illustrating a configuration of a processing system according to an embodiment;
FIG. 2(a) is a view illustrating a hardware configuration of a processing server and a mediation server, and FIG. 2(b) is a view illustrating a hardware configuration of a user terminal;
FIG. 3 is a view illustrating an example of an input/output screen;
FIG. 4 is a functional block view of the processing server;
FIG. 5 is a flowchart illustrating processing of the processing server;
FIG. 6 is a view for explaining stages into which a period from flowering to harvesting is divided, daily average fruit temperatures of the respective stages, and thresholds of the respective stages;
FIG. 7 is a view schematically illustrating a relationship between a stage and temperature sensitivity;
FIGs. 8(a) to 8(e) are views for explaining prediction processing of a harvest date according to a first specific example;
FIGs. 9(a) to 9(f) are views for explaining processing for matching a predicted harvest date with a target harvest date in the first specific example (part 1);
FIGs. 10(a) to 10(f) are views for explaining the processing for matching the predicted harvest date with the target harvest date in the first specific example (part 2);
FIGs. 11(a) to 11(e) are views for explaining prediction processing of a harvest date according to a second specific example; and
FIGs. 12(a) to 12(c) are views for explaining processing for matching the predicted harvest date with the target harvest date in the second specific example.

[MODES FOR CARRYING OUT THE INVENTION]

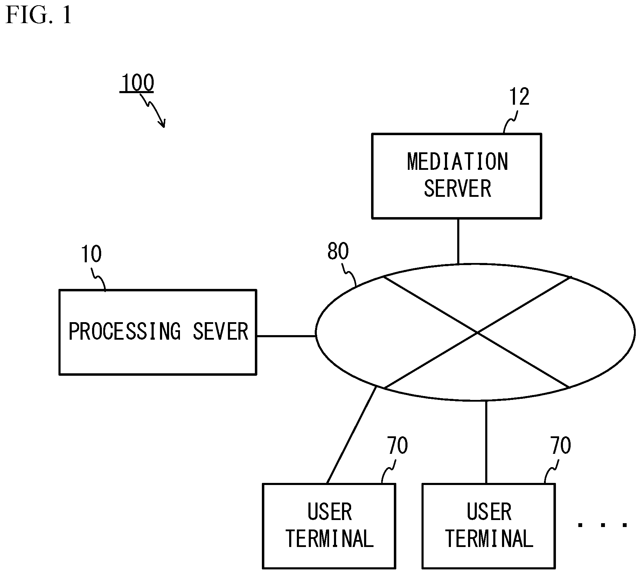

Hereinafter, an embodiment of the prediction system will be described in detail with reference to FIGs. 1 to 12(c). FIG. 1 schematically illustrates a configuration of a prediction system 100 according to an embodiment. The prediction system 100 of the present embodiment is a system used by a producer of fruit vegetables (assumed to be strawberries in the present embodiment), and is a system that executes prediction regarding harvest time of strawberries and provides information on the predicted harvest time and information for adjusting the harvest time to the producer.
As illustrated in FIG. 1, the prediction system 100 includes a processing server 10, a mediation server 12, and user terminals 70. The processing server 10, the mediation server 12, and the user terminals 70 are connected to one another via a network 80 such as the Internet, and information can be exchanged between predetermined devices (between the processing server 10 and the mediation server 12, and between the mediation server 12 and the user terminals 70 in the present embodiment).
The processing server 10 acquires information input in the user terminal 70 via the mediation server 12 and executes processing of predicting a harvest date of a strawberry based on the acquired information. The processing server 10 specifies how to adjust the cultivation environment so that the predicted harvest date becomes the target harvest date. Further, the processing server 10 outputs information on the predicted harvest date of the strawberry and information on a cultivation environment adjustment method for adjusting the predicted harvest date to the target harvest date to the user terminal 70 via the mediation server 12.

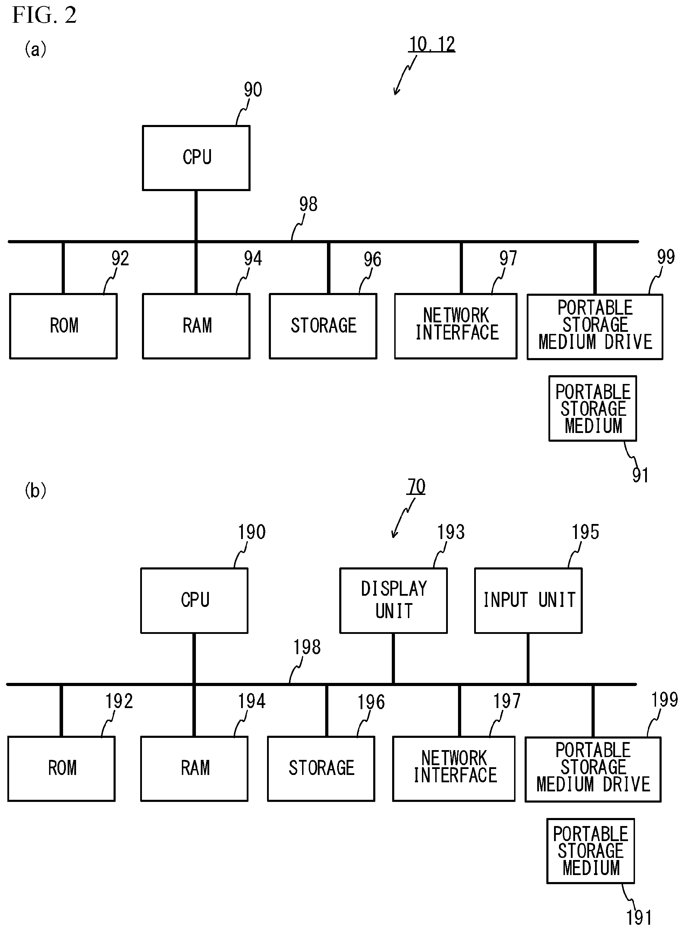

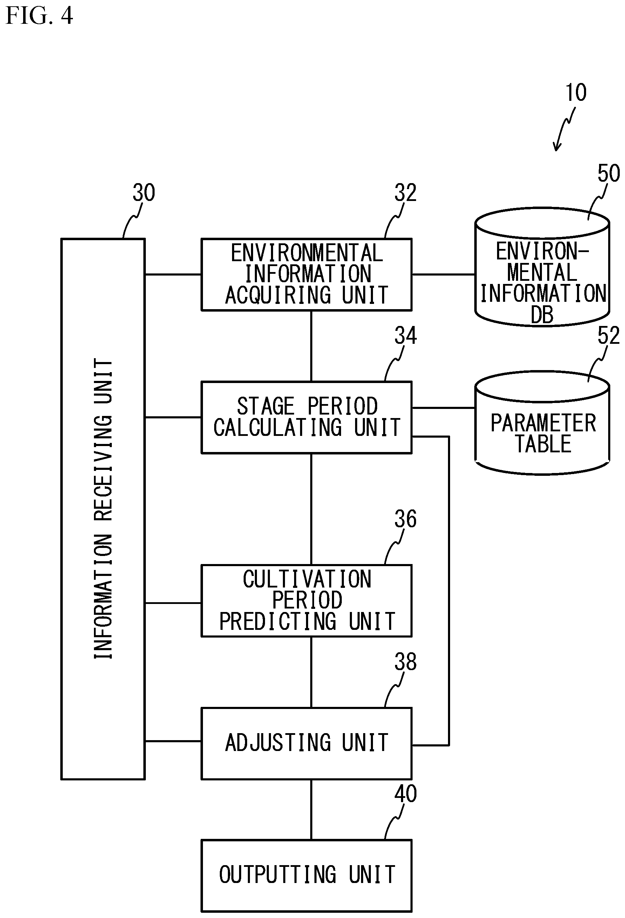

FIG. 2(a) schematically illustrates a hardware configuration of the processing server 10. As illustrated in FIG. 2(a), the processing server 10 includes a central processing unit (CPU) 90, a read only memory (ROM) 92, a random access memory (RAM) 94, a storage (for example, a solid state drive (SSD) or a hard disk drive (HDD)) 96, a network interface 97, a portable storage medium drive 99, and the like. These components of the processing server 10 are connected to a bus 98. In the processing server 10, the ROM 92 executes a program (including a prediction program and an environment adjustment program) stored in the CPU 90 or the HDD 96 or a program read from a portable storage medium 91 by the portable storage medium drive 99, thereby realizing the functions of the respective units illustrated in FIG. 4. Note that the functions of the units in FIG. 4 may be implemented by an integrated circuit such as an application specific integrated circuit (ASIC) or a field programmable gate array (FPGA). The functions of the respective units in FIG. 4 will be described in detail later.

Returning to FIG. 1, the mediation server 12 acquires information (information needed for the prediction processing in the processing server 10) input in the user terminal 70 and transmits the information to the processing server 10. The mediation server 12 acquires information output from the processing server 10 and transmits the information to the user terminal 70. The mediation server 12 has the same hardware configuration as the processing server 10 (see FIG. 2(a)).

The user terminal 70 is a terminal such as a smartphone or a personal computer (PC) used by a strawberry producer. The producer inputs needed information to the user terminal 70. The user terminal 70 transmits the input information to the mediation server 12. The user terminal 70 acquires information output from the processing server 10 via the mediation server 12 and displays the information.

Herein, the user terminal 70 has a hardware configuration as illustrated in FIG. 2(b) as an example. As illustrated in FIG. 2(b), the user terminals 70 include a CPU 190, a ROM 192, a RAM 194, a storage 196, a network interface 197, a display unit 193, an input unit 195, and a portable storage medium drive 199 capable of reading information stored in a portable storage medium 191. The display unit 193 includes a liquid crystal display or the like, and the input unit 195 includes a touch panel, a keyboard, a mouse, or the like. These components of the user terminal 70 are connected to a bus 198.

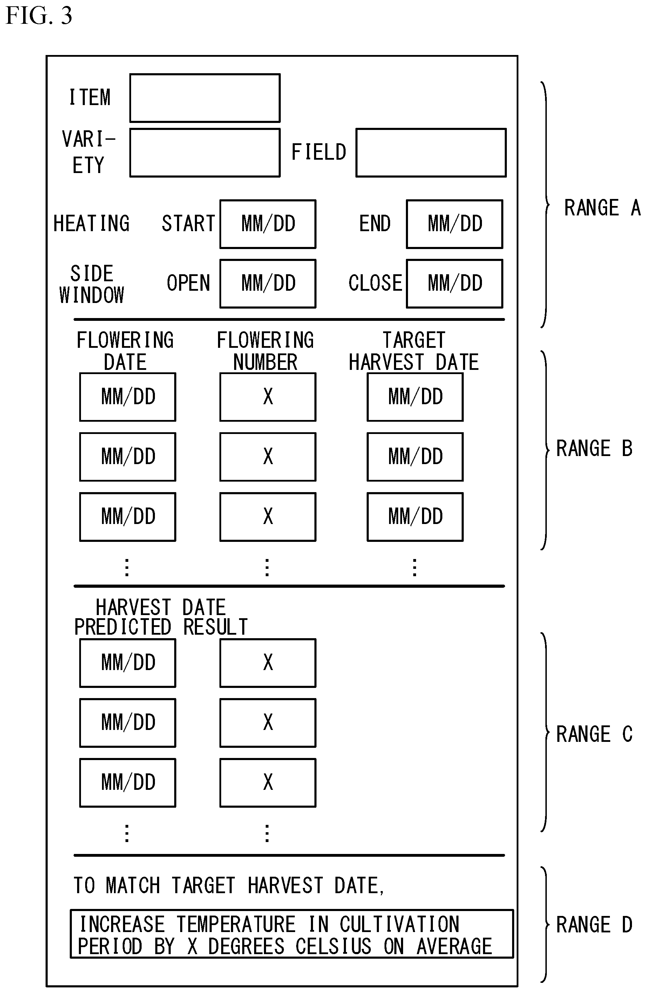

FIG. 3 illustrates an example of an input/output screen displayed on the display unit 193 of the user terminal 70. As illustrated in FIG. 3, the input/output screen is provided with ranges A to D. The range A is provided with input boxes for the producer to input the items and varieties of fruit vegetables and information on a field (name, location, etc.), and input boxes for the producer to input the start and end times of heating and the opening and closing times of the side windows. The range B is provided with input boxes for the producer to input information on the flowering date of the seedlings actually planted in the field and information on the number of flowering at the flowering date. In addition, the range B is provided with input boxes for the producer to input information (target harvest date) indicating when the producer would like to harvest flowers (fruits) that have flowered on each flowering date. In the range C, the result predicted by the processing server 10 (how many strawberries can be harvested on what date) is displayed. In the range D, information output from the processing server 10 and indicating how to change the cultivation environment so that flowers (fruits) flowered on each flowering date can be harvested on the target harvest date is displayed.

(Regarding Functions of Processing Server 10)

FIG. 4 is a functional block view of the processing server 10. In the processing server 10, the CPU 90 executes a program to achieve each function as illustrated in FIG. 4. Specifically, the processing server 10 includes an information receiving unit 30, an environmental information acquiring unit 32, a stage period calculating unit 34, a cultivation period predicting unit 36, an adjusting unit 38, and an outputting unit 40.

In FIG. 4, an environmental information DB 50 and a parameter table 52 stored in the storage 196 or the like of the processing server 10 are also illustrated. The environmental information DB 50 stores past environmental information (information on temperature and solar radiation amount) of the field. In addition, the environmental information DB 50 stores predicted values of future environmental information (mesh agro-meteorological information) and normal values of past environmental information (used as predicted values of future environmental information), which are acquired from an external server (for example, a server managed by the National Agriculture and Food Research Organization). The environmental information DB 50 may be stored in an external database server.

The parameter table 52 is a table that stores parameters used by the stage period calculating unit 34. The parameters stored in the parameter table 52 will be described in detail later.

The information receiving unit 30 acquires information input to the range A and the range B of the input/output screen of FIG. 3 by the producer operating the user terminal 70 from the mediation server 12, and passes the acquired information to the environmental information acquiring unit 32, the stage period calculating unit 34, the cultivation period predicting unit 36, and the adjusting unit 38.

The environmental information acquiring unit 32 acquires information on temperature (past data, predicted data, and normal data) and information on solar radiation amount (past data, predicted data, and normal solar radiation amount data) of the field input to the range A from the environmental information DB 50. Specifically, the environmental information acquiring unit 32 acquires, from the environmental information DB 50, information on temperature and solar radiation amount on and after the earliest day among one or more flowering dates input by the producer. The environmental information acquiring unit 32 corrects the temperature information (the predicted date and the normal temperature date) acquired from the environmental information DB 50 based on the information on the heating and the side window input by the producer. When the producer sets the information on LED illumination and the information on light shielding, the environmental information acquiring unit 32 may correct the information on solar radiation amount based on such information.

The stage period calculating unit 34 calculates the fruit temperature (the temperature of the fruit surface) on each day on the basis of the information on the temperature and the solar radiation amount on each day. The stage period calculating unit 34 calculates the number of days required for each of the plurality of stages (the period of each of the plurality of stages) acquired by dividing the cultivation period from flowering to harvest of the strawberry, on the basis of the calculated fruit temperature of each day. A method of calculating the fruit temperature and a method of calculating the period of each stage by the stage period calculating unit 34 will be described later.

The cultivation period predicting unit 36 adds up each period of the stages calculated by the stage period calculating unit 34 for each flower (fruit) flowering on each flowering date, and predicts the cultivation period of the flower (fruit) flowered on each flowering date. The cultivation period predicting unit 36 predicts the harvest date (maturity date) of the fruit corresponding to each flowering date based on each flowering date and the cultivation period of the flower (fruit) flowered on each flowering date.

The adjusting unit 38 determines whether or not the harvest date (predicted harvest date) predicted by the cultivation period predicting unit 36 matches the target harvest date input by the producer, and if not, requires a fruit temperature that matches the predicted harvest date with the target harvest date. The adjusting unit 38 requires the fruit temperature that matches the predicted harvest date with the target harvest date in cooperation with the stage period calculating unit 34 and the cultivation period predicting unit 36.

The outputting unit 40 outputs the predicted harvest date by the cultivation period predicting unit 36 and information, required by the adjusting unit 38, for matching the predicted harvest date with the target harvest date to the user terminal 70 via the mediation server 12. Thus, the information output from the outputting unit 40 is displayed in the range C and the range D of the input/output screen on the user terminal 70. The information required to match the predicted harvest date with the target harvest date may be information on the fruit temperature, required by the adjusting unit 38, matching the predicted harvest date with the target harvest date, or may be control information on temperature or on solar radiation amount required to achieve the fruit temperature.

(Regarding Processing of Processing Server 10)

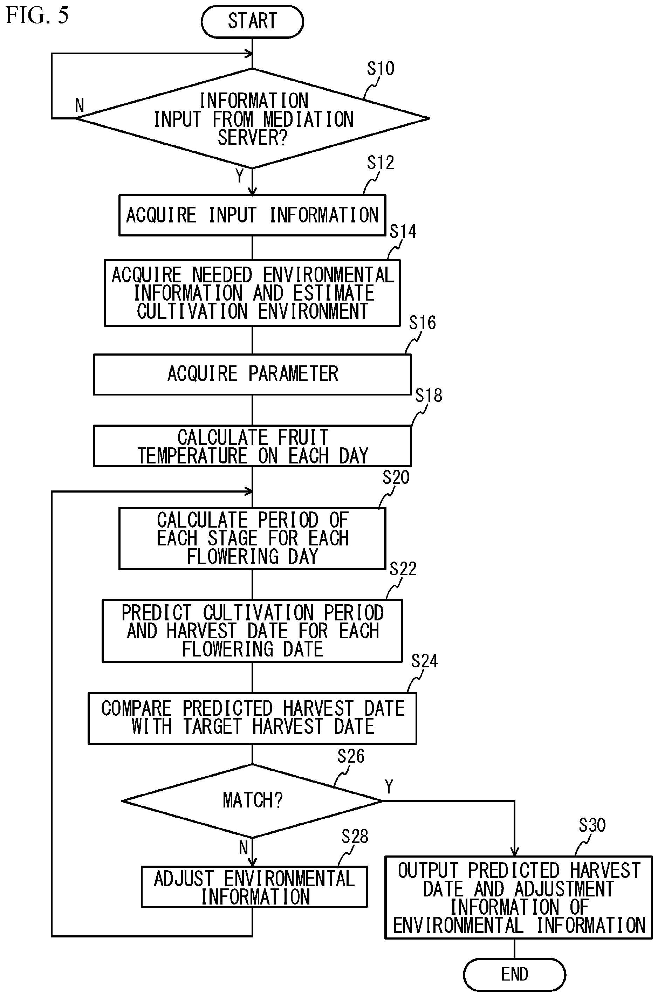

Next, the processing of the processing server 10 will be described in detail according to a flowchart of FIG. 5 with reference to other drawings as appropriate.

When the processing of FIG. 5 is started, first, in step S10, the information receiving unit 30 waits until information is input from the mediation server 12. That is, the information receiving unit 30 waits until the information input to the input/output screen of FIG. 3 in the user terminal 70 is transmitted via the mediation server 12. When the information receiving unit 30 receives the input of the information from the mediation server 12, the processing proceeds to step S12.

When the process proceeds to step S12, the information receiving unit 30 acquires information input from the mediation server 12. The information receiving unit 30 passes the acquired information to the environmental information acquiring unit 32, the stage period calculating unit 34, the cultivation period predicting unit 36, and the adjusting unit 38.

Next, in step S14, the environmental information acquiring unit 32 acquires needed environmental information and estimates the cultivation environment. Specifically, the environmental information acquiring unit 32 acquires information (measured values and predicted values) on temperature and solar radiation amount on and after the flowering date, corrects the information on the temperature in accordance with the situation of the field based on the information on the heating and the side window input by the producer, and estimates the temperature (degrees Celsius) in the facility. In addition, when the producer sets information on LED illumination and information on light shielding, the information on the solar radiation amount is corrected based on such information, and the solar radiation amount (MJ) in the facility is estimated.

Next, in step S16, the stage period calculating unit 34 acquires parameters used for processing in steps S18 and S20 described later from the parameter table 52. The details of the parameters will be described later.

Next, in step S18, the stage period calculating unit 34 calculates the fruit temperature on each day. Specifically, the stage period calculating unit 34 calculates the fruit temperature on each day using the following equation (1).

$$\text{Fruit temperature (degrees Celsius)} = \text{Temperature in facility} \times (a \cdot \ln \text{ solar radiation amount in facility} + b) \qquad (1)$$

Here, a and b are parameters (coefficients) predetermined for each field (house). The parameters a and b are defined for each field in the parameter table 52.

Next, in step S20, the stage period calculating unit 34 calculates the period of each stage (the number of days required for each stage) for each flowering date.

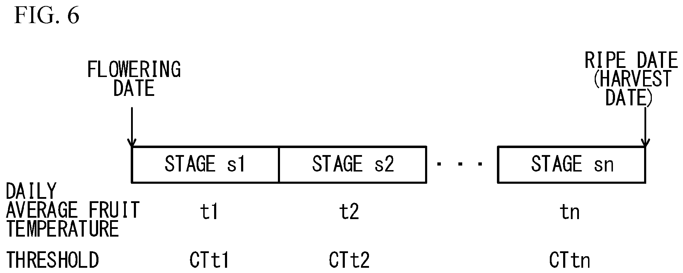

In the present embodiment, as illustrated in FIG. 6, the period from the flowering date to the harvest date is divided into a plurality of periods, and each period is referred to as a stage (growth stage). The stages are denoted by s1, s2, ... sn, and the daily average fruit temperatures of the stages s1, s2,. sn are denoted by t1, t2, ...tn. Further, the thresholds of the stages s1, s2,..., sn are set to CTs1, CTs2,..., CTsn. The values n, t1 to tn, and CTs1 to CTsn are predetermined for each variety and stored in the parameter table 52.

The stage period calculating unit 34 calculates the period Tk of each stage sk from the following equation (2).

$$Tk = CTsk/(ck \cdot tk + dk) \ldots (2)$$

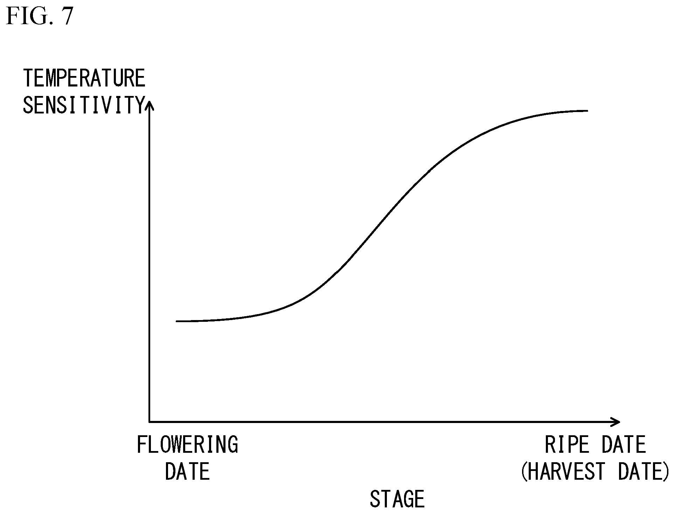

In the above equation (2), ck and dk are parameters (coefficients) determined for each variety, and are stored in the parameter table 52. FIG. 7 is a graph schematically illustrating the relationship between the stage and the temperature sensitivity in strawberry ripening. As illustrated in FIG. 7, in the case of strawberry, the temperature sensitivity increases as the stage increases. Therefore, in order to express this temperature sensitivity, the value of the parameter ck is set to be larger and the value of the parameter dk is set to be smaller as the stage is closer to the harvest date. That is, the closer the stage is to the harvest date, the more likely the value of the denominator (ck·tk+dk) in the above equation (2) is to be affected by a change in the value of the temperature tk. The denominator (ck·tk+dk) is a temperature-related index value for one day, and the above equation (2) means that the period (number of days) until an integrated value of the temperature-related index value for one day reaches the threshold CTsk is the period Tk of the stage sk.

Next, in step S22, the cultivation period predicting unit 36 predicts the cultivation period and the harvest date for each flowering date. The cultivation period predicting unit 36 adds up the periods Tk of the respective stages sk acquired for each flowering date as in a following equation (3) to predict the cultivation period (the number of ripe date).

$$\text{Cultivation period} = T1 + T2 + \ldots + Tn$$

$$= CTs1/(c1 \cdot t1 + d1) + CTs2/(c2 \cdot t2 + d2) + \ldots$$

$$\ldots + CTsn/(cn \cdot tn + dn) \ldots (3)$$

The cultivation period predicting unit 36 predicts the harvest date for each flowering date using the following equation (4).

$$\text{Harvest date} = \text{flowering date} + \text{cultivation period} \ldots (4)$$

Next, in step S24, the adjusting unit 38 compares the harvest date (predicted harvest date) predicted by the cultivation period predicting unit 36 with the target harvest date.

Next, in step S26, the adjusting unit 38 determines whether or not the predicted harvest date matches the target harvest date. If the determination in step S26 is negative, the processing proceeds to step S28, and the adjusting unit 38 adjusts the environmental information used for the prediction. For example, when the predicted harvest date is later than the target harvest date, the daily fruit temperature calculated in step S18 is increased by a predetermined temperature (for example, 0.5 degrees Celsius) in order to accelerate growth. On the other hand, if the predicted harvest date is earlier than the target harvest date, the daily fruit temperature calculated in step S18 is decreased by a predetermined temperature (for example, 0.5 degrees Celsius) in order to delay growth. Thereafter, the processing returns to step S20, and the stage period calculating unit 34 and the cultivation period predicting unit 36 execute the processing of steps S20 and S22 in the same manner as described above. Then, when the processing proceeds to step S24, the adjusting unit 38 compares the predicted harvest date with the target harvest date again. As a result, if the predicted harvest date does not match the target harvest date (S26: Negative), the adjusting unit 38 adjusts the environmental information used for the prediction again in step S28 (increases or decrease the fruit temperature by a predetermined temperature).

Thereafter, when the determination in step S26 is affirmative as a result of the processing in steps S20 to S28, the processing proceeds to step S30, and the outputting unit 40 outputs the harvest date (predicted harvest date) predicted first by the cultivation period predicting unit 36 and the cultivation environment adjustment information acquired as a result of step S28 to the user terminals 70 via the mediation server 12. The cultivation environment adjustment information may be information indicating that the fruit temperature is to be increased by X degrees Celsius or decreased by X degrees Celsius, or information indicating how the temperature or the solar radiation amount in the facility is to be adjusted in order to increase or decrease the fruit temperature by X degrees Celsius. The latter information may be derived from the former information and the above equation (1). Thus, the entire processing of FIG. 5 is completed.

The producer may adjust the cultivation environment of the field based on the cultivation environment adjustment information output to the user terminal 70. When the user terminal 70 is connected to an equipment for environmental control installed in the field, the user terminal 70 may automatically control the equipment for environmental control based on the cultivation environment adjustment information. This can save the producer the trouble of adjusting the equipment.

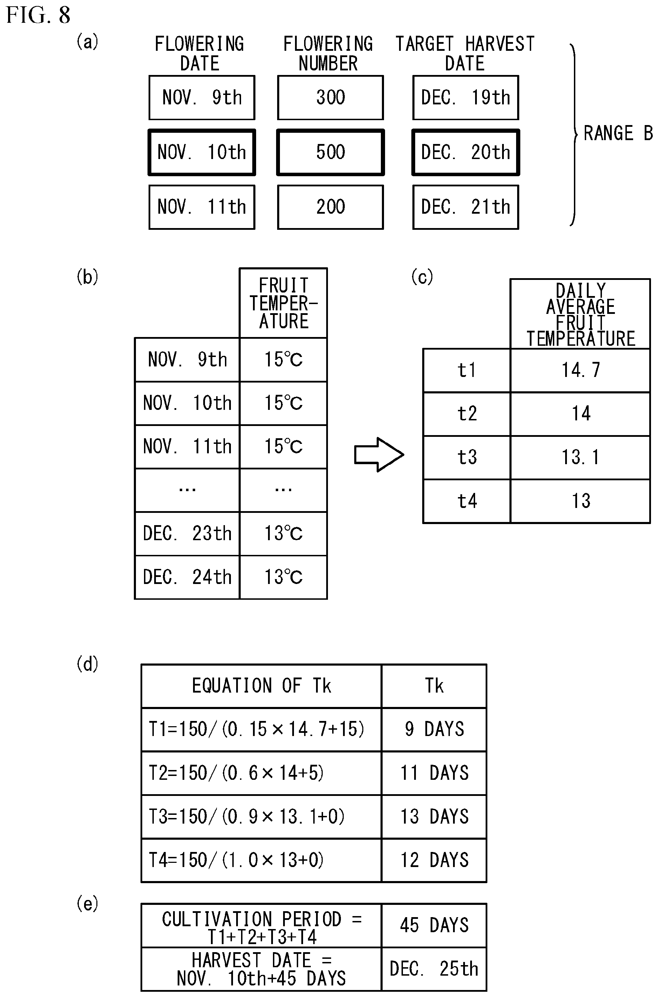

Hereinafter, a specific example of the processing executed by the processing server 10 will be described in detail with reference to FIGs. 8(a) to 12(c).

(First Specific Example)

First, a first specific example will be described with reference to FIGs. 8(a) to 10(f). FIG. 8(a) illustrates a state in which the producer has input, in the range B of the input/output screen (FIG. 3), that 300 flowers have flowered on November 9th, 500 flowers have flowered on November 10th, and 200 flowers have flowered on November 11th, and further has input December 19th, 20th, and 21st as the target harvest dates of the fruits corresponding to the respective flowering dates.

Then, it is assumed that values of the fruit temperature as illustrated in FIG. 8(b) are acquired as a result of the stage period calculating unit 34 calculating the fruit temperature of each day from the information on temperature and solar radiation amount acquired by the environmental information acquiring unit 32. In the first specific example, it is assumed that the cultivation period of the strawberry is divided into four stages s1 to s4, and the daily average fruit temperature t1 to t4 of each of stages s1 to s4 is acquired as illustrated in FIG. 8(c). Note that, in the step of acquiring the daily average fruit temperatures t1 to t4 in FIG. 8(c), it is needed to set the period of the stage s1 to s4, but in the first step, a predetermined approximate period is used as each period of the stage s1 to s4 for acquiring the daily average fruit temperatures t1 to t4. After acquiring the period of each stage using the set daily average fruit temperature, the stage period calculating unit 34 may repeat the processing of recalculating the acquired daily average fruit temperatures t1 to t4 of the periods of each stage, and further acquiring the period of each stage again using the recalculated daily average fruit temperatures t1 to t4.

Then, the stage period calculating unit 34 calculates the periods T1 to T4 of the respective stages based on the above equation (2). For example, it is assumed that the periods T1 to T4 of the respective stages of fruits having a flowering date of November 10th are acquired as illustrated in FIG. 8(d). In the first specific example, the parameters CTs1 to CTs4 in the above equation (2) are 150, c1, c2, c3, and c4 are 0.15, 0.6, 0.9, and 1.0, and d1, d2, d3, and d4 are 15, 5, 0, and 0.

Then, the cultivation period predicting unit 36 adds up the periods T1 to T4 of the respective stages to predict the cultivation period. As a result, as illustrated in FIG. 8(e), the cultivation period is predicted to be 45 days. In this case, the cultivation period predicting unit 36 predicts that the harvest date of the flower (fruit) that flowered on November 10th is December 25th, which is 45 days after the flowering date.

The harvest dates of fruits with flowering dates of November 9th and 11th are also predicted in the same manner. As a result, the harvest dates of fruits with flowering dates of November 9th and 11th are predicted to be December 24th and 26th.

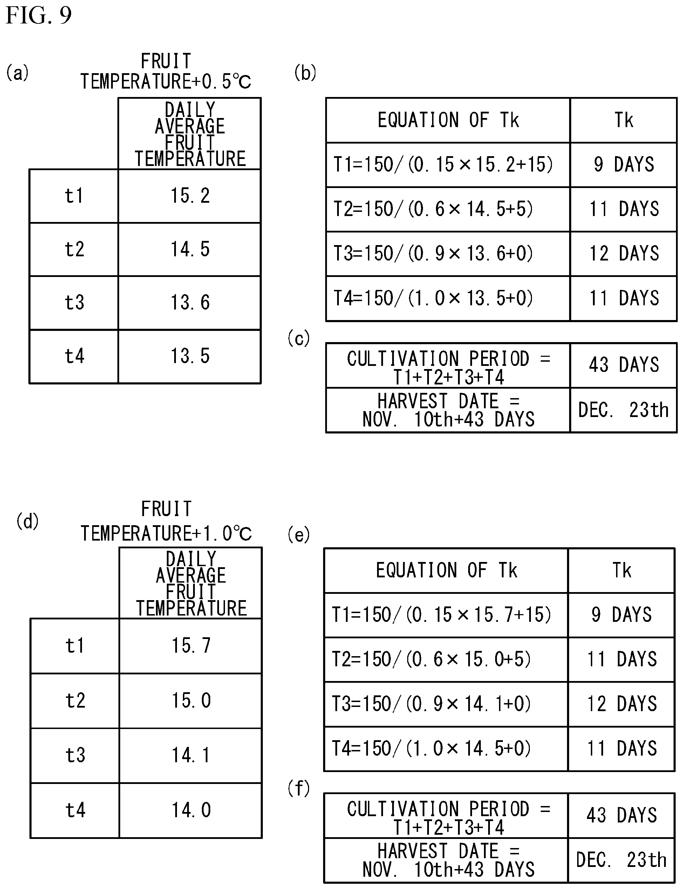

Herein, the target harvest date of the flower (fruit) flowered on November 10th is December 20th as illustrated in FIG. 8(a), and does not match the predicted harvest date (December 25th). In this case, in order to match the predicted harvest date with the target harvest date, it is needed to accelerate the growth of the strawberries. Therefore, the adjusting unit 38 increases the fruit temperature used for the prediction by a predetermined temperature (here, 0.5 degrees Celsius), and causes the stage period calculating unit 34 and the cultivation period predicting unit 36 to execute the prediction of the harvest date again. That is, since the daily average fruit temperature of each stage is as illustrated in FIG. 9(a), when the period of each stage is calculated using the daily average fruit temperature, the period is as illustrated in FIG. 9(b), and the harvest date is predicted to be December 23rd as illustrated in FIG. 9(c).

However, even if the fruit temperature is increased by 0.5 degrees Celsius as described above, the predicted harvest date does not match the target harvest date, and therefore the adjusting unit 38 further increases the fruit temperature used for prediction by 0.5 degrees Celsius. (see FIG. 9(d)), and causes the stage period calculating unit 34 and the cultivation period predicting unit 36 to execute the prediction of the harvest date again (see FIGs. 9(e) and 9(f)). As a result, the harvest date is predicted to be December 23rd as illustrated in FIG. 9(f).

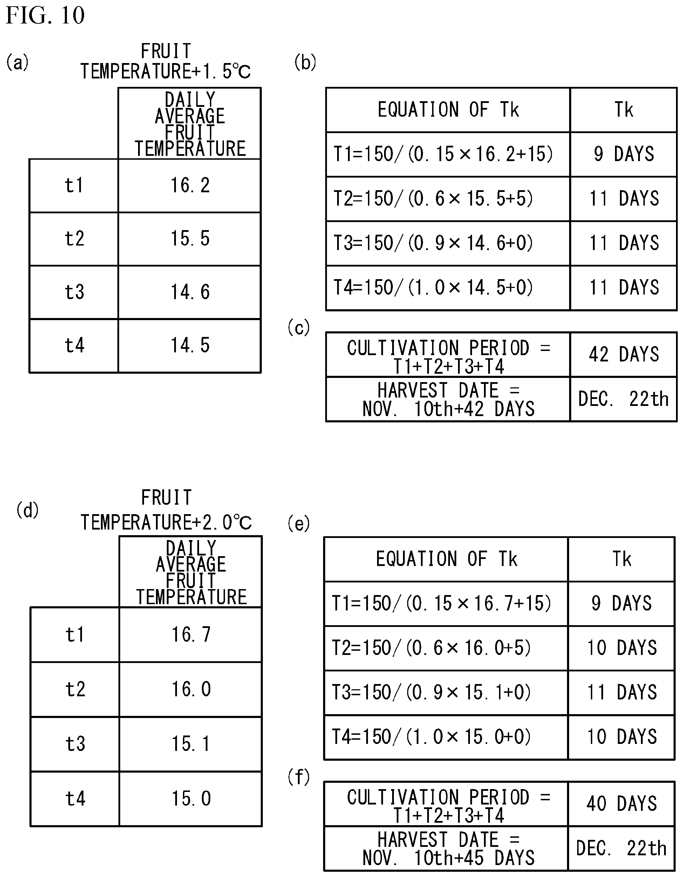

However, even if the fruit temperature is increased by 1.0 degrees Celsius as described above, the predicted harvest date does not match the target harvest date, and thus the adjusting unit 38 further increases the fruit temperature used for prediction by 0.5 degrees Celsius (see FIG. 10(a)), and causes the stage period calculating unit 34 and the cultivation period predicting unit 36 to execute prediction of the harvest date again (see FIGs. 10(b) and 10(c)). As a result, the harvest date is predicted to be December 22nd as illustrated in FIG. 10(c).

However, even if the fruit temperature is increased by 1.5 degrees Celsius as described above, the predicted harvest date does not match the target harvest date, and therefore the adjusting unit 38 further increases the fruit temperature used for prediction by 0.5 degrees Celsius (see FIG. 10(d)), and causes the stage period calculating unit 34 and the cultivation period predicting unit 36 to execute the prediction of the harvest date again (see FIGs. 10(e) and 10(f)). As a result, the harvest date is predicted to be December 20th, as illustrated in FIG. 10(f).

By the processing as described above, information that the predicted harvest date can be matched with the target harvest date by increasing the fruit temperature by 2 degrees Celsius on average is acquired. Therefore, the outputting unit 40 can output to the user terminals 70 that the harvest can be performed on the first predicted harvest date (see FIG. 8(e)) without environment control, that the fruit temperature needs to be increased by 2 degrees Celsius on average in order to harvest on the target harvest date (or that the temperature of the field needs to be increased or the solar radiation amount or LED illumination needs to be controlled in order to increase the fruit temperature), and the like.

(Second Specific Example)

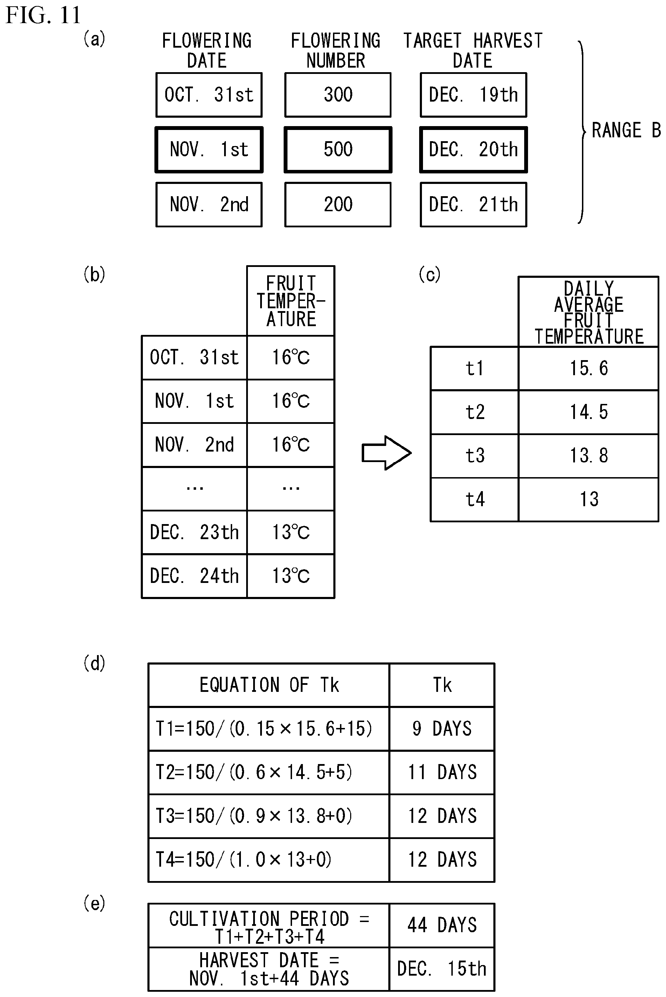

Next, a second specific example will be described with reference to FIGs. 11(a) to 12(c).

FIG. 11(a) illustrates a state in which the producer has input in the range B of the input/output screen (FIG. 3) that 300 flowers have flowered on October 31, 500 flowers have flowered on November 1st, and 200 flowers have flowered on November 2nd, and further has input December 19th, 20th, and 21st as the target harvest dates of the fruits corresponding to the respective flowering dates.

Then, it is assumed that values of the fruit temperature as illustrated in FIG. 11(b) are acquired as a result of the calculation of the fruit temperature of each day by the stage period calculating unit 34 from the information on temperature and solar radiation amount acquired by the environmental information acquiring unit 32. In the second specific example, it is assumed that the cultivation period of the strawberry is divided into four stages s1 to s4, and the daily average fruit temperatures t1 to t4 of each of the stages s1 to s4 are acquired as illustrated in FIG. 11(c).

In this case, the stage period calculating unit 34 calculates the periods T1 to T4 of the respective stages based on the above equation (2). For example, it is assumed that the periods T1 to T4 of the respective stages of fruits having a flowering date of November 1st are acquired as illustrated in FIG. 11(d). Note that the parameters (coefficients) of the above equation (2) of second specific example CTs1 to CTs4, c1 to c4, and d1 to d4 are the same as those in first specific example.

Then, the cultivation period predicting unit 36 adds up the periods T1 to T4 of the respective stages to predict the cultivation period. As a result, as illustrated in FIG. 11(e), it is assumed that the cultivation period is predicted to be 44 days. In this case, the cultivation period predicting unit 36 predicts the harvest date of the flower (fruit) that bloomed on November 1st as December 15th, which is 44 days after the flowering date.

The harvest dates of fruits with flowering dates of November 9th and 11th are also predicted in the same manner. As a result, the harvest dates of fruits with flowering dates of November 9th and 11th are predicted to be December 14th and 16th.

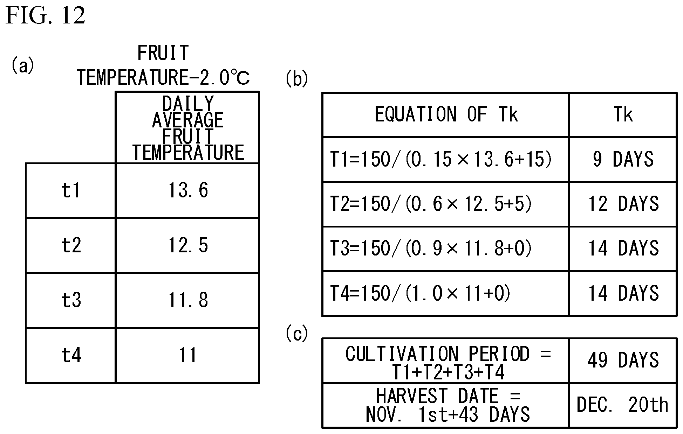

Herein, the target harvest date of the flower (fruit) flowered on November 1st is December 20th as illustrated in FIG. 11(a), and does not match the predicted harvest date. In this case, in order to match the predicted harvest date (December 15th) with the target harvest date (December 20th), it is needed to slow down the growth of the strawberries. Therefore, the adjusting unit 38 repeats the processing of lowering the fruit temperature used for the prediction by a predetermined temperature (here, 0.5 degrees Celsius) until the predicted harvest date matches the target harvest date. As a result, if the fruit temperature is lowered by 2.0 degrees Celsius on average as illustrated in FIG. 12(a), the period of each stage can be calculated as illustrated in FIG. 12(b), and as a result, information that the harvest date can be matched with the target harvest date (December 20th) can be acquired as illustrated in FIG. 12(c).

Therefore, the outputting unit 40 can output to the user terminal 70 that the harvest can be performed on the predicted harvest date (see FIG. 11(e)) without the environmental control, that the fruit temperature needs to be lowered by 2.0 degrees Celsius in order to harvest on the target harvest date (that is, the temperature in the facility needs to be lowered or the solar radiation amount in the facility needs to be lowered in order to lower the fruit temperature by 2.0 degrees Celsius), and the like.

As described above in detail, according to the present embodiment, the stage period calculating unit 34 of the processing server 10 calculates the fruit temperatures of the strawberry on and after the flowering date, and calculates the periods T1 to T4 of the respective stages acquired by dividing the period from flowering to harvest based on the fruit temperatures. The cultivation period predicting unit 36 predicts the cultivation period by summing the periods T1 to T4 of the respective stages calculated by the stage period calculating unit 34. In the equation (equation (2)) by which the stage period calculating unit 34 calculates the periods T1 to T4 of the respective stages, the contribution degree of the fruit temperature to the calculation result of the period of each stage is determined for each stage. Thus, in the present embodiment, the periods T1 to T4 of the respective stages can be accurately acquired in consideration of the temperature sensitivity of each stage. In addition, since the cultivation period and the harvest date are predicted by adding the periods T1 to T4 of the respective stages acquired with high accuracy, the cultivation period and the harvest date can be predicted with high accuracy.

Further, according to the present embodiment, in the equation (2), the temperature-related index value ($c_k \cdot t_k + d_k$) for each day of each stage is acquired, and the period until the integrated value of the temperature-related index value for each day reaches the threshold value ($CT_{sk}$) is set as the period of each stage. The contribution degree of the fruit temperature to the temperature-related index value is set for each stage. Therefore, the temperature-related indicator value can be acquired in consideration of the temperature sensitivity of each stage, and the periods T1 to T4 of the respective stages can be acquired with high accuracy by using the integrated value of the temperature-related indicator value.

In the present embodiment, since the temperature sensitivity (the parameters $c_k$ and $d_k$ in equation (2)) is determined for each item or each variety, the period of each stage, the cultivation period, and the harvest date can be accurately predicted regardless of the item or the variety.

In the present embodiment, the fruit temperature is estimated based on the temperature of the environment and the solar radiation amount in which the fruit is cultivated (see the above equation (1)). By estimating the fruit temperature in this way, it is not needed to actually measure the fruit temperature. In addition, by using the fruit temperature, it is possible to predict the period of each stage, the cultivation period, and the harvest date with higher accuracy than in a case where the temperature in the facility is simply used.

In addition, in the present embodiment, the flowering date and the number of flowering are input by the producer, and thus the number of fruits that can be harvested on the predicted harvest date can also be predicted. Thus, the harvest amount of each day can be predicted at an early stage with high accuracy, and thus, in the case of a tourist strawberry plantation, the number of received visit reservations can be set to an appropriate value at an early stage. In addition, general strawberry producers can appropriately perform employment adjustment of part-time employees.

The processing server 10 in the present embodiment outputs adjustment information of the fruit temperature (that is, the temperature or the solar radiation amount) for matching the information of the harvest date predicted as described above (predicted harvest date) with the target harvest date to the user terminals 70. Thus, the producer who sees the adjustment information can appropriately adjust the cultivation environment based on the adjustment information. In addition, in a case where the user terminal 70 controls an equipment that adjusts the cultivation environment, the cultivation environment can be automatically adjusted appropriately. By adjusting the cultivation environment to an appropriate cultivation environment in this way, the harvest date can be adjusted to a time when the demand is high, and therefore, the producer can trade strawberries at a high price, and can increase the profit.

In the above embodiment, the case where the producer manually inputs the date of flowering and the number of flowering to the input/output screen has been described, but it is not limited. For example, an image captured by a camera installed in the field or a camera provided in a moving device that moves in the field may be analyzed, and the date of flowering and the number of flowering may be automatically detected based on the analysis result. Thus, the producer can eliminate the work of walking around in the field to grasp the date of flowering and the number of flowering, and manually inputting the date and the number.

In the above embodiment, the case where the producer inputs the target harvest date in association with the flowering date and the number of flowering in the range B of the input/output screen has been described, but it is not limited. For example, the target harvest date and the target harvest quantity may be input regardless of the flowering date. In this case, the processing server 10 may output, to the user terminal 70, the cultivation environment adjustment information for enabling the target harvest number of fruits to be harvested on the target harvest date with the smallest adjustment range of the fruit temperature.

In the above embodiment, the prediction system 100 including the mediation server 12 has been described, but it is not limited. That is, the mediation server 12 may be omitted, and the processing server 10 and the user terminal 70 may directly exchange information.

**In** the above embodiment, the processing server 10 predicts the cultivation period and the harvest date of the strawberry, but it is not limited, and a cultivation period and a harvest date of other fruit vegetables may be predicted.

The equations in the above embodiment are examples. The equation for calculating the fruit temperature may be an equation other than the above equation (1), and the equation for calculating the period Tk of each stage may be an equation other than the above equation (2) as long as the equation takes into account the temperature sensitivity of each stage.

The processing functions described above can be implemented by a computer. In this case, a program describing the processing contents of the functions to be included in the processing apparatus is provided. The program is executed by the computer, and thus the processing functions are achieved on the computer. The program describing the processing contents may be recorded in a computer-readable storage medium (excluding a carrier wave).

When the program is distributed, for example, the program is sold in a form of a portable storage medium such as a digital versatile disc (DVD) or a compact disc read only memory (CD-ROM) in which the program is recorded. The program may be stored in a storage device of a server computer, and the program may be transferred from the server computer to another computer via a network.

A computer that executes the program stores the program recorded in, for example, a portable storage medium or transferred from the server computer in its own storage device. The computer reads the program from the storage device and executes processing according to the program. The computer may read the program directly from the portable storage medium and execute the processing according to the program. Further, the computer can also sequentially execute processing according to the received program each time the program is transferred from the server computer.

While the exemplary embodiments of the present invention have been illustrated in detail, the present invention is not limited to the above-mentioned embodiments, and other embodiments, variations and variations may be made without departing from the scope of the present invention.

**Claims**

1. A prediction method for predicting a cultivation period from flowering to a time when a fruit is able to be harvested in a fruit vegetable, implemented by a computer, the prediction method comprising:

   acquiring or estimating a fruit temperature that is a temperature of a fruit surface of the fruit vegetable on and after a flowering date;
   calculating a period of each of a plurality of stages acquired by dividing a period from flowering to harvest, based on the fruit temperature; and
   predicting the cultivation period by summing calculated periods of the plurality of stages,
   **characterized in that** in the calculating, a contribution degree of the fruit temperature to a calculation result of a period of each of the plurality of stages is determined for each of the stages.

2. The prediction method according to claim 1, **characterized in that** the calculating includes acquiring a temperature-related index value for each day of each stage based on the fruit temperature in each of the plurality of stages, and calculating a period until an integrated value of the temperature-related index value for each day of each stage reaches a threshold value set for each of the stages, and
   the contribution degree of the fruit temperature to the temperature-related index value is determined for each of the stages.

3. The prediction method according to claim 1, **characterized in that** the contribution degree is determined for each item and each variety of the fruit vegetable.

4. The prediction method according to claim 1, **characterized in that** in the estimating, the fruit temperature is estimated based on temperature and solar radiation amount of an environment in which the fruit is cultivated.

5. The prediction method according to claim 1, further comprising acquiring information on the number of flowering on a plurality of flowering dates, implemented by computer,
   **characterized in that** the predicting includes predicting the cultivation period corresponding to each of the plurality of flowering dates, and predicting the number of harvested fruits on each day based on a predicted cultivation period and the information on the number of flowering.

6. An environment adjustment method, implemented by a computer, **characterized by** comprising:

   acquiring a result predicted by using the prediction method according to any one of claims 1 to 5, and
   adjusting at least one of temperature and solar radiation amount of an environment in which the fruit is cultivated such that the predicted result becomes a desired value, and outputting an adjustment result.

7. A prediction program for predicting a cultivation period from flowering to a time when a fruit is able to be harvested in a fruit vegetable, implemented by a computer, the prediction program comprising:

   acquiring or estimating a fruit temperature that is a temperature of a fruit surface of the fruit vegetable on and after a flowering date;
   calculating a period of each of a plurality of stages acquired by dividing a period from flowering to harvest, based on the fruit temperature; and
   predicting the cultivation period by summing calculated periods of the plurality of stages,
   **characterized in that** in the calculating, a contribution degree of the fruit temperature to a calculation result of a period of each of the plurality of stages is determined for each of the stages.

8. The prediction program according to claim 7, further comprising acquiring information on the number of flowering on a plurality of flowering dates, implemented by computer,
   **characterized in that** the predicting includes predicting the cultivation period corresponding to each of the plurality of flowering dates, and predicting the number of harvested fruits on each day based on a predicted cultivation period and the information on the number of flowering.

9. An environment adjustment program, implemented by a computer, comprising:

   acquiring or estimating a fruit temperature that is a temperature of a fruit surface of the fruit vegetable on and after a flowering date;

calculating a period of each of a plurality of stages acquired by dividing a period from flowering to harvest, based on the fruit temperature;

predicting the cultivation period by summing calculated periods of the plurality of stages; and

adjusting at least one of temperature and solar radiation amount of an environment in which the fruit is cultivated such that a result in the predicting becomes a desired value, and outputting an adjustment result, **characterized in that** in the calculating, a contribution degree of the fruit temperature to a calculation result of a period of each of the plurality of stages is determined for each of the stages.

10. The environment adjustment program according to claim 9, further comprising acquiring information on the number of flowering on a plurality of flowering dates, implemented by computer, **characterized in that** the predicting includes predicting the cultivation period corresponding to each of the plurality of flowering dates, and predicting the number of harvested fruits on each day based on a predicted cultivation period and the information on the number of flowering.

FIG. 1

FIG. 2

(a)

10, 12

90
CPU

98

92
ROM

94
RAM

96
STORAGE

97
NETWORK INTERFACE

99
PORTABLE STORAGE MEDIUM DRIVE

PORTABLE STORAGE MEDIUM

91

(b)

70

190
CPU

193
DISPLAY UNIT

195
INPUT UNIT

198

192
ROM

194
RAM

196
STORAGE

197
NETWORK INTERFACE

199
PORTABLE STORAGE MEDIUM DRIVE

PORTABLE STORAGE MEDIUM

191

FIG. 3

| | | |
|---|---|---|
| ITEM | | |
| VARI-ETY | | FIELD |

HEATING   START [MM/DD]   END [MM/DD]

SIDE WINDOW   OPEN [MM/DD]   CLOSE [MM/DD]

RANGE A

| FLOWERING DATE | FLOWERING NUMBER | TARGET HARVEST DATE |
|---|---|---|
| MM/DD | X | MM/DD |
| MM/DD | X | MM/DD |
| MM/DD | X | MM/DD |
| ⋮ | ⋮ | ⋮ |

RANGE B

| HARVEST DATE PREDICTED | RESULT |
|---|---|
| MM/DD | X |
| MM/DD | X |
| MM/DD | X |
| ⋮ | ⋮ |

RANGE C

TO MATCH TARGET HARVEST DATE,

INCREASE TEMPERATURE IN CULTIVATION PERIOD BY X DEGREES CELSIUS ON AVERAGE

RANGE D

FIG. 4

FIG. 5

```
                        ┌──────────┐
                        │  START   │
                        └────┬─────┘
                             │
                             ▼                    S10
           ┌─────────────────────────────────┐
      N    │       INFORMATION               │
   ◄───────│  INPUT FROM MEDIATION           │
           │          SERVER?                │
           └────────────────┬────────────────┘
                            │ Y
                            ▼                     S12
           ┌─────────────────────────────────┐
           │   ACQUIRE INPUT INFORMATION     │
           └────────────────┬────────────────┘
                            │                     S14
           ┌─────────────────────────────────┐
           │  ACQUIRE NEEDED ENVIRONMENTAL   │
           │  INFORMATION AND ESTIMATE       │
           │  CULTIVATION ENVIRONMENT        │
           └────────────────┬────────────────┘
                            │                     S16
           ┌─────────────────────────────────┐
           │       ACQUIRE PARAMETER         │
           └────────────────┬────────────────┘
                            │                     S18
           ┌─────────────────────────────────┐
           │       CALCULATE FRUIT           │
           │   TEMPERATURE ON EACH DAY       │
           └────────────────┬────────────────┘
                            │                     S20
           ┌─────────────────────────────────┐
           │    CALCULATE PERIOD OF          │
           │    EACH STAGE FOR EACH          │
           │        FLOWERING DAY            │
           └────────────────┬────────────────┘
                            │                     S22
           ┌─────────────────────────────────┐
           │  PREDICT CULTIVATION PERIOD     │
           │  AND HARVEST DATE FOR EACH      │
           │        FLOWERING DATE           │
           └────────────────┬────────────────┘
                            │                     S24
           ┌─────────────────────────────────┐
           │  COMPARE PREDICTED HARVEST DATE │
           │    WITH TARGET HARVEST DATE     │
           └────────────────┬────────────────┘
                            │                     S26
                            ▼
                   ┌─────────────────┐    Y
                   │     MATCH?      │──────────┐
                   └────────┬────────┘          │
                            │ N        S28       │        S30
           ┌───────────────────────┐  ┌──────────────────────────┐
           │ ADJUST ENVIRONMENTAL  │  │ OUTPUT PREDICTED HARVEST │
           │    INFORMATION        │  │ DATE AND ADJUSTMENT      │
           └───────────────────────┘  │ INFORMATION OF           │
                                      │ ENVIRONMENTAL INFORMATION│
                                      └────────────┬─────────────┘
                                                   │
                                              ┌────┴─────┐
                                              │   END    │
                                              └──────────┘
```

FIG. 6

FLOWERING
DATE

RIPE DATE
(HARVEST
DATE)

| STAGE s1 | STAGE s2 | · · · | STAGE sn |

DAILY
AVERAGE FRUIT     $t1$          $t2$                    $tn$
TEMPERATURE

THRESHOLD         $CTt1$        $CTt2$                  $CTtn$

FIG. 7

## FIG. 8

(a)

| FLOWERING DATE | FLOWERING NUMBER | TARGET HARVEST DATE | |
|---|---|---|---|
| NOV. 9th | 300 | DEC. 19th | |
| **NOV. 10th** | **500** | **DEC. 20th** | RANGE B |
| NOV. 11th | 200 | DEC. 21th | |

(b)

| | FRUIT TEMPER-ATURE |
|---|---|
| NOV. 9th | 15°C |
| NOV. 10th | 15°C |
| NOV. 11th | 15°C |
| ... | ... |
| DEC. 23th | 13°C |
| DEC. 24th | 13°C |

⇒

(c)

| | DAILY AVERAGE FRUIT TEMPERATURE |
|---|---|
| t1 | 14.7 |
| t2 | 14 |
| t3 | 13.1 |
| t4 | 13 |

(d)

| EQUATION OF Tk | Tk |
|---|---|
| $T1 = 150/(0.15 \times 14.7 + 15)$ | 9 DAYS |
| $T2 = 150/(0.6 \times 14 + 5)$ | 11 DAYS |
| $T3 = 150/(0.9 \times 13.1 + 0)$ | 13 DAYS |
| $T4 = 150/(1.0 \times 13 + 0)$ | 12 DAYS |

(e)

| | |
|---|---|
| CULTIVATION PERIOD = T1+T2+T3+T4 | 45 DAYS |
| HARVEST DATE = NOV. 10th+45 DAYS | DEC. 25th |

# FIG. 9

(a)

**FRUIT TEMPERATURE+0.5℃**

|  | DAILY AVERAGE FRUIT TEMPERATURE |
|---|---|
| t1 | 15.2 |
| t2 | 14.5 |
| t3 | 13.6 |
| t4 | 13.5 |

(b)

| EQUATION OF Tk | Tk |
|---|---|
| T1=150/(0.15×15.2+15) | 9 DAYS |
| T2=150/(0.6×14.5+5) | 11 DAYS |
| T3=150/(0.9×13.6+0) | 12 DAYS |
| T4=150/(1.0×13.5+0) | 11 DAYS |

(c)

| CULTIVATION PERIOD = T1+T2+T3+T4 | 43 DAYS |
|---|---|
| HARVEST DATE = NOV. 10th+43 DAYS | DEC. 23th |

(d)

**FRUIT TEMPERATURE+1.0℃**

|  | DAILY AVERAGE FRUIT TEMPERATURE |
|---|---|
| t1 | 15.7 |
| t2 | 15.0 |
| t3 | 14.1 |
| t4 | 14.0 |

(e)

| EQUATION OF Tk | Tk |
|---|---|
| T1=150/(0.15×15.7+15) | 9 DAYS |
| T2=150/(0.6×15.0+5) | 11 DAYS |
| T3=150/(0.9×14.1+0) | 12 DAYS |
| T4=150/(1.0×14.5+0) | 11 DAYS |

(f)

| CULTIVATION PERIOD = T1+T2+T3+T4 | 43 DAYS |
|---|---|
| HARVEST DATE = NOV. 10th+43 DAYS | DEC. 23th |

## FIG. 10

(a)

FRUIT
TEMPERATURE+1.5℃

|  | DAILY AVERAGE FRUIT TEMPERATURE |
|---|---|
| t1 | 16.2 |
| t2 | 15.5 |
| t3 | 14.6 |
| t4 | 14.5 |

(b)

| EQUATION OF Tk | Tk |
|---|---|
| T1=150/(0.15×16.2+15) | 9 DAYS |
| T2=150/(0.6×15.5+5) | 11 DAYS |
| T3=150/(0.9×14.6+0) | 11 DAYS |
| T4=150/(1.0×14.5+0) | 11 DAYS |

(c)

| CULTIVATION PERIOD = T1+T2+T3+T4 | 42 DAYS |
|---|---|
| HARVEST DATE = NOV. 10th+42 DAYS | DEC. 22th |

(d)

FRUIT
TEMPERATURE+2.0℃

|  | DAILY AVERAGE FRUIT TEMPERATURE |
|---|---|
| t1 | 16.7 |
| t2 | 16.0 |
| t3 | 15.1 |
| t4 | 15.0 |

(e)

| EQUATION OF Tk | Tk |
|---|---|
| T1=150/(0.15×16.7+15) | 9 DAYS |
| T2=150/(0.6×16.0+5) | 10 DAYS |
| T3=150/(0.9×15.1+0) | 11 DAYS |
| T4=150/(1.0×15.0+0) | 10 DAYS |

(f)

| CULTIVATION PERIOD = T1+T2+T3+T4 | 40 DAYS |
|---|---|
| HARVEST DATE = NOV. 10th+45 DAYS | DEC. 22th |

# FIG. 11

(a)

| FLOWERING DATE | FLOWERING NUMBER | TARGET HARVEST DATE | |
|---|---|---|---|
| OCT. 31st | 300 | DEC. 19th | |
| NOV. 1st | 500 | DEC. 20th | RANGE B |
| NOV. 2nd | 200 | DEC. 21th | |

(b)

| | FRUIT TEMPER-ATURE |
|---|---|
| OCT. 31st | 16°C |
| NOV. 1st | 16°C |
| NOV. 2nd | 16°C |
| ... | ... |
| DEC. 23th | 13°C |
| DEC. 24th | 13°C |

(c)

| | DAILY AVERAGE FRUIT TEMPERATURE |
|---|---|
| t1 | 15.6 |
| t2 | 14.5 |
| t3 | 13.8 |
| t4 | 13 |

(d)

| EQUATION OF Tk | Tk |
|---|---|
| T1=150/(0.15 × 15.6+15) | 9 DAYS |
| T2=150/(0.6 × 14.5+5) | 11 DAYS |
| T3=150/(0.9 × 13.8+0) | 12 DAYS |
| T4=150/(1.0 × 13+0) | 12 DAYS |

(e)

| CULTIVATION PERIOD = T1+T2+T3+T4 | 44 DAYS |
|---|---|
| HARVEST DATE = NOV. 1st+44 DAYS | DEC. 15th |

## FIG. 12

(a)

FRUIT
TEMPERATURE−2.0℃

| | DAILY AVERAGE FRUIT TEMPERATURE |
|---|---|
| t1 | 13.6 |
| t2 | 12.5 |
| t3 | 11.8 |
| t4 | 11 |

(b)

| EQUATION OF Tk | Tk |
|---|---|
| T1=150/(0.15×13.6+15) | 9 DAYS |
| T2=150/(0.6×12.5+5) | 12 DAYS |
| T3=150/(0.9×11.8+0) | 14 DAYS |
| T4=150/(1.0×11+0) | 14 DAYS |

(c)

| CULTIVATION PERIOD = T1+T2+T3+T4 | 49 DAYS |
|---|---|
| HARVEST DATE = NOV. 1st+43 DAYS | DEC. 20th |

## INTERNATIONAL SEARCH REPORT

| International application No. |
|---|
| **PCT/JP2023/025916** |

**A. CLASSIFICATION OF SUBJECT MATTER**

*G06Q 50/02*(2012.01)i; *A01G 7/00*(2006.01)i; *G06Q 10/04*(2023.01)i
FI:  G06Q50/02; A01G7/00 603; G06Q10/04

According to International Patent Classification (IPC) or to both national classification and IPC

**B. FIELDS SEARCHED**

Minimum documentation searched (classification system followed by classification symbols)

G06Q10/00-99/00; A01G7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 113128779 A (EAST CHINA JIAOTONG UNIVERSITY) 16 July 2021 (2021-07-16)<br>    entire text, all drawings | 1-10 |
| A | JP 2020-053039 A (NAT AGRICULTURE & FOOD RES ORG) 02 April 2020 (2020-04-02)<br>    entire text, all drawings | 1-10 |
| A | 宇都宮 直樹, 山田 寿, 片岡 郁雄, 苫名 孝, ウンシュウミカン果実の成熟に及ぼす果実温度の影響, 園芸学会雑誌 [online], 1982, vol. 51, no. 2, pp. 135-141, [retrieval date 14 September 2023], Internet: <URL: https://www.jstage.jst.go.jp/article/jjshs1925/51/2/51_2_135/_article/-char/ja>, <https://doi.org/10.2503/jjshs.51.135><br>    entire text, all drawings, (UTSUNOMIYA, Naoki. YAMADA, Hisashi. KATAOKA, Ikuo. TOMANA, Takashi. The Effect of Fruit Temperatures on the Maturation of Satsuma Mandarin (Citus unshiu Marc.) Fruits. Journal of the Japanese Society for Horticultural Science.) | 1-10 |
| A | JP 2022-127228 A (NAT AGRICULTURE & FOOD RES ORG) 31 August 2022 (2022-08-31)<br>    entire text, all drawings | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/025916**

### C.    DOCUMENTS CONSIDERED TO BE RELEVANT

| Category* | Citation of document, with indication, where appropriate, of the relevant passages | Relevant to claim No. |
|---|---|---|
| A | JP 2022-098812 A (ISEKI AGRICULT MACH) 04 July 2022 (2022-07-04) <br> entire text, all drawings | 1-10 |
| A | JP 2022-078987 A (NAT AGRICULTURE & FOOD RES ORG) 25 May 2022 (2022-05-25) <br> entire text, all drawings | 1-10 |
| A | WO 2021/175859 A1 (SIGNIFY HOLDING B. V.) 10 September 2021 (2021-09-10) <br> entire text, all drawings | 1-10 |
| P, A | JP 2023-076905 A (NAT AGRICULTURE & FOOD RES ORG) 05 June 2023 (2023-06-05) <br> entire text, all drawings | 1-10 |

Form PCT/ISA/210 (second sheet) (January 2015)

**INTERNATIONAL SEARCH REPORT**
Information on patent family members

International application No.

**PCT/JP2023/025916**

| Patent document cited in search report | | | Publication date (day/month/year) | Patent family member(s) | | | Publication date (day/month/year) |
|---|---|---|---|---|---|---|---|
| CN | 113128779 | A | 16 July 2021 | (Family: none) | | | |
| JP | 2020-053039 | A | 02 April 2020 | (Family: none) | | | |
| JP | 2022-127228 | A | 31 August 2022 | WO entire text, all drawings | 2022/176611 | A1 | |
| JP | 2022-098812 | A | 04 July 2022 | (Family: none) | | | |
| JP | 2022-078987 | A | 25 May 2022 | (Family: none) | | | |
| WO | 2021/175859 | A1 | 10 September 2021 | US entire text, all drawings CN | 2023/0102560 115135139 | A1 A | |
| JP | 2023-076905 | A | 05 June 2023 | (Family: none) | | | |

Form PCT/ISA/210 (patent family annex) (January 2015)

**EP 4 607 439 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05336843 B
- JP H0711125 B
- JP 2013191107 A
- JP 2015 A

- JP 176339 A
- JP 2019176766 A
- WO 202026358 A

28